# EUROPEAN PATENT APPLICATION

(11) **EP 0 606 167 A1**
(43) Date of publication of application: **13.07.1994**
(21) Application number: 94300095.0
(22) Date of filing: 07.01.1994
(51) Int. Cl.: A47J 43/18

(54) **Roasting device and a method of roasting poultry**

(30) Priority: 08.01.1993 GB 9300291
(71) Applicant: GLOBAL STUDIOS LIMITED, Redruth, Cornwall TR15 3SF (GB)
(72) Inventor: The designation of the inventor has not yet been filed
(74) Representative: Bryer, Kenneth Robert

(57) **Abstract**

A roasting device (10) comprising an annular tray (11) and a hollow apertured support (12) upstanding from the tray (11) and communicating with an aperture (17) in the tray (11) for receiving a bird to be roasted in an upright position with the support (12) inserted into the body cavity of the bird, the tray (11) and the apertured support (12) being so arranged as to allow air to flow from beneath the tray (11), up through the support and out through the apertures (16) therein into the bird itself during cooking, while fat from the bird drains into, and is collected in, the annular tray (11).

## Description

The present invention relates to the roasting of meat joints, particularly poultry.

It has long been known to roast joints of meat on a metal spit so that the heat from the fire or oven is conducted directly into the centre of the joint by the metal as well as penetrating from the outside through the meat itself. This has the advantage of ensuring that the centre of the joint is thoroughly cooked, which is particulary important for chickens nowadays because of the possible presence of salmonella, and also reduces the overall cooking time. A further advantage of spit-roasting is that the fat from the joint, which liquifies during cooking, drips out rather than being retained in the meat itself. The resulting fat-reduced product is now considered to be healthier for the consumer.

The advantages of spit-roasting have not until recently been obtainable in the ordinary domestic oven but poultry roasters are now available which comprise a wire frame which can be inserted in a bird to support it in an upright position over a drip tray. The object of the present invention is to provide an alternative, improved version of such a roasting device.

Accordingly the present invention provides a roasting device comprising an annular tray and a hollow, apertured support upstanding from the tray and communicating with an aperture in the tray, for receiving a bird to be roasted in an upright position with the support inserted into the body cavity of the bird, the tray and the apertured support being so arranged as to allow air to flow from beneath the tray, up through the support and out through the aperture or apertures therein into the bird itself during cooking, while fat from the bird drains into, and is collected in, the annular tray.

The roasting device of the invention is intended to be placed directly on a wire shelf in an oven and promotes the cooking of a bird fitted onto its support by enabling hot air to circulate directly from the oven into the centre of the bird through the apertures in the upright support. Heat is also conducted and radiated by the support. The device is preferably of a material which is a good conductor of heat so that it also supplies heat to the centre of the bird by conduction. The support and the tray may be of different material: the support may for example be of metal and the tray of heat resistant glass or ceramics or the support and the tray may be of the same material. Preferably, for simplicity and cheapness of manufacture the tray and support are integrally moulded from a ceramics material.

The position of the apertures in the support should be such that the support forms a continuous curtain wall around the tray aperture so as to prevent fat which accumulates in the tray during cooking from entering the interior of the support and thence dripping onto the base of the oven or onto food or containers on a shelf beneath the poultry roaster. The size and shape of the support and the tray may be varied according to the type of poultry with which the roaster is to be used.

It will be appreciated that, although the device of the invention has been devised particularly for roasting poultry, it could readily be used for other meat joints.

The invention also comprehends a method of roasting poultry including supporting a bird in an upright position on an apertured hollow support upstanding from a surrounding drip tray in a heated environment such as to allow hot air to circulate from beneath the tray into the hollow support and thence through the support apertures into the interior of the bird during cooking.

Various embodiments of the invention will now be more particularly described, by way of example, with reference to the accompanying drawings, in which:
Figure 1 is a schematic cross-sectional view of a poultry roasting device formed as a first embodiment of the invention;
Figure 2 is a perspective view of the embodiment of Figure 1;
Figure 3 is a sectional view similar to Figure 1 of a second embodiment;
Figure 4 is a sectional view, similar to Figure 1 of a third embodiment; and
Figure 5 is a sectional view similar to Figure 1 of a fourth embodiment.

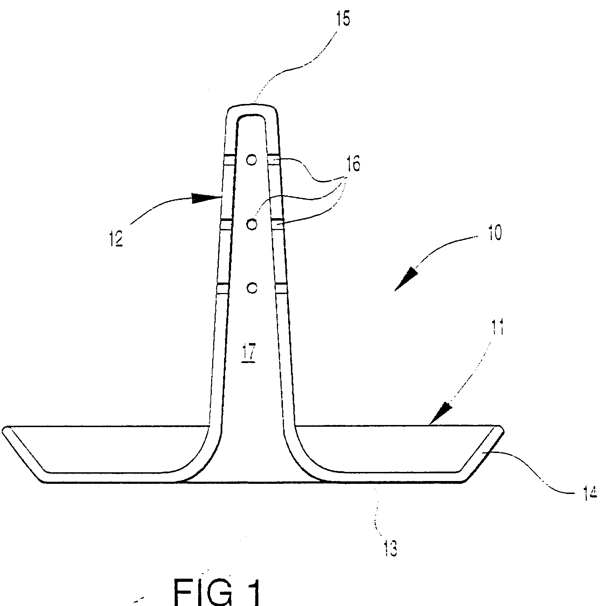

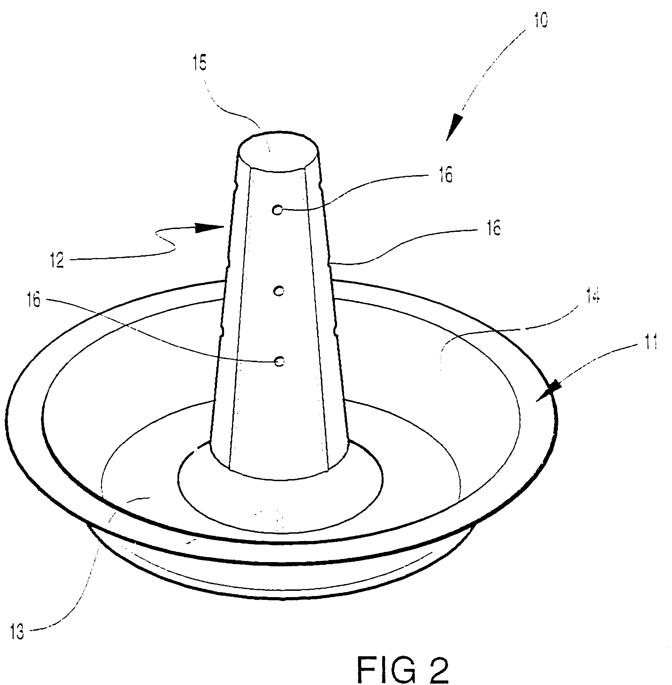

With reference to Figures 1 and 2 of the drawings, a poultry roasting device is shown generally indicated 10 in its normal orientation of use and comprises a circular, annular tray 11 and a central, hollow upstanding support 12. The tray 11 comprises a generally flat, annular base 13 with an upstanding outer peripheral rim 14 while the central support 12 is frusto-conical in shape, tapering upwardly from the tray 11 and closed by a flat upper wall 15. The conical wall of the support 12 has a plurality of apertures 16 therein allowing communication between the hollow interior 17 of the support and the exterior of the support. All of the apertures 16 are substantially above the level of the top of the outer rim 14 of the tray 11.

In use of the poultry roaster 10, a chicken or other bird, not shown, is fitted onto the support 12 so that the support 12 is accommodated within the body cavity of the chicken and the device is then placed directly on a wire shelf in an oven. During cooking, the chicken will be heated from the outside and also from the inside by conduction of heat to its interior through the support 12 and by hot air which can flow freely from beneath the tray 11 up through the hollow centre 17 of the support 12 and out through the apertures 16 into the body cavity of the chicken. In heating the chicken, the hot air will cool and tend to fall along the outside of the support 12 so as to enhance the circulation of hot air to the centre of the chicken. At the same time, fat from the chicken will drain down into the tray 11 where it will collect. The support 12 is of such a size as to support the chicken above the level of the fat which collects in the tray 11 so as to minimise the amount of fat on the bird when it is removed from the oven. Moreover, the apertures 16 are of such a size and so located above the tray 11 that there will be little tendency for fat or body fluids to pass through them into the interior of the support 12 and thence into the oven itself.

The roasting device 10 is of ceramics material and moulded with conically tapered walls and rounded edges both for convenience of moulding and for aesthetic reasons. The tray 11 could, however, be of any desired shape in plan and the support 12 could be generally cylindrical, oval in section or of other shapes as preferred. The support 12 is, however, preferably closed at the top to prevent juices from the bird from running down into it.

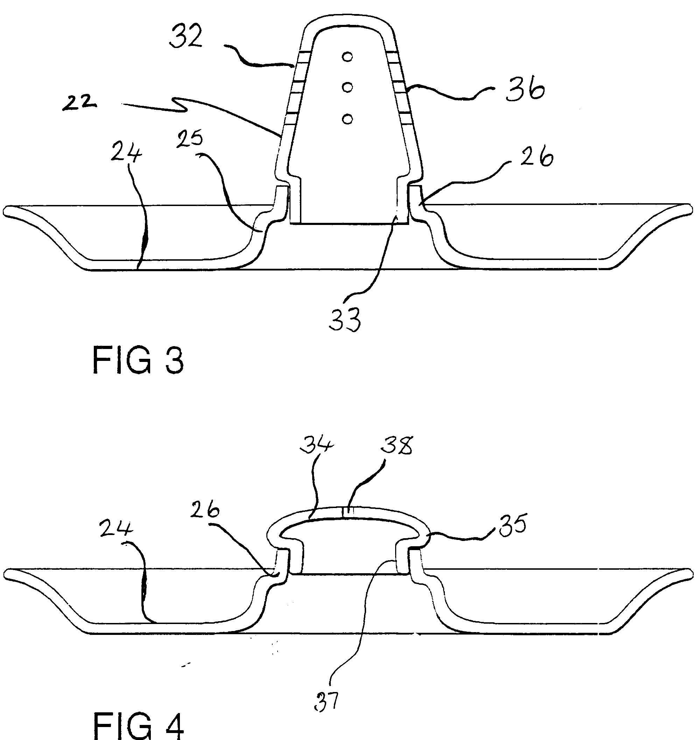

As shown in Figure 3, the alternative embodiment is formed in two parts, comprising an annular tray 24 having a central upstanding boss 25 the annular perimetral wall 26 of which defines a socket into which a removable support 32 can be fitted. The support 32 shown in Figure 3 is an upright column similar in profile to the support 12 of the embodiments of Figures 1 and 2, but shorter in length, adapted to take smaller items of poultry or other items to be roasted.

The supported 32 has a plurality of holes 36 in a pattern similar to that of the holes 16 in the support 12 of the embodiment of Figures 1 and 2. At its lower end the support 32 has an approximately cylindrical skirt wall 33 the outer surface of which fits into the annular peripheral socket 26.

Figure 6 shows a further embodiment in which an annular tray 24 identical in form to that of the embodiment of Figure 3 is fitted with a relatively low domed cap 34 having a shoulder 35 and an annular skirt 37 which can be fitted into the socket 26 of the tray 24 as before. The domed cap 34 has a single central aperture 38 allowing the combination of tray 24 and cap 34 to be used in the manner of a traditional pie dish. A tray 24 may be equipped with a plurality of different central supports, such as the support 32 illustrated in Figure 3, a longer support corresponding in size to the support 12 of the embodiment of Figure 2 and a low cap such as the cap 34. Each of these interchangeable components allows heat from the area below the tray 24 to pass upwardly through an opening into the interior of the item being cooked.

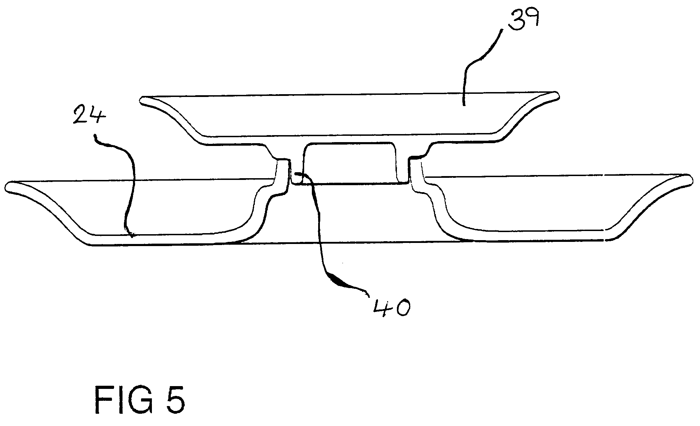

To allow for a wider range of use the tray 24 illustrated in Figures 3 and 4 may also be provided with a further support tray 39 having a central lower skirt 40 similar to the skirts 33, 37 of the central supports 32, 34 of the embodiments of Figures 3 and 4, and although this configuration does not have a cooking function, it allows a secondary use of the tray 24 as a serving dish. A two-tier serving dish such as that illustrated in Figure 5 can be used in many ways, for example by providing a sauce or dip in the annular tray 24 and pile of potato chips, crudités or other individual items to be selected and dipped into the sauce before being consumed.

## Claims

1. A roasting device (11) characterised in that it comprises an annular tray (11) and a hollow apertured support (12) upstanding from the tray (11) and communicating with an aperture in the tray for receiving a bird to be roasted in an upright position with the support (12) inserted into the body cavity of the bird, the tray (11) and the apertured support (12) being so arranged as to allow air to flow from beneath the tray (11), up through the support (12) and out through the apertures (16) therein into the bird itself during cooking, while fat from the bird drains into, and is collected in, the annular tray (11).

2. A roasting device according to Claim 1, characterised in that the said annular tray (14) and the said apertured hollow support (12) are integrally formed of the same material.

3. A roasting device according to Claim 1 or Claim 2, characterised in that the said apertured support (12) is a generally tubular member closed at its upper end (15) and having apertures 16 in its cylindrical side wall.

4. A roasting device according to Claim 1 or Claim 2, characterised in that the hollow support (12) is conical with a narrow cone angle.

5. A roasting device according to any preceding Claim, characterised in that the said annular tray (11) is circular or polygonal in plan.

6. A roasting device according to any preceding claim, characterised in that the lowermost aperture (16) in the wall of the hollow support (12) is located at a height not less than that of the outer perimeter of the said annular tray (11).

7. A roasting device according to any preceding claim, characterised in that the apertured support (22) is removably mounted on a socket (26) of the tray (24).

8. A roasting device according to Claim 7, characterised in that it includes additional apertured supports (22), (34) of different dimensions which are interchangeable with the said apertured support (12).

9. A roasting device according to Claim 7 or Claim 8, characterised in that it further includes a dish or tray (39) shaped to be received in the socket (26) of the tray (24).

10. A method of roasting poultry including supporting a bird in an upright position on an apertured hollow support (12) upstanding from a surrounding drip tray (11), and placing the tray (11) directly on an oven shelf to enable hot air from the oven to circulate from beneath the tray (11) into the hollow support (12) and thence through the support apertures into the interior of the bird during cooking.
